# EUROPÄISCHE PATENTSCHRIFT

(11) **EP 1 790 673 B1**
(45) Veröffentlichungstag und Bekanntmachung des Hinweises auf die Patenterteilung: **15.04.2009**
(21) Anmeldenummer: 06024084.3
(22) Anmeldetag: 21.11.2006
(51) Int. Cl.: C08G 18/02, C08G 18/32, C08G 18/67, C08G 18/79, C08G 18/81, C09D 175/16

(54) **Lackierte Folien**
Painted films
Feuilles laquées

(30) Priorität: 29.11.2005 DE 102005057245
(43) Veröffentlichungstag der Anmeldung: 30.05.2007
(73) Patentinhaber: Bayer MaterialScience AG, 51368 Leverkusen (DE)
(72) Erfinder: Weikard, Jan, Dr., 51519 Odenthal-Erberich (DE); Fischer, Wolfgang, Dr., 40668 Meerbusch (DE); Rappen, Diethelm, 47495 Rheinberg (DE); Stoeckel, Nicolas, Dr., 50733 Köln (DE)

(56) Entgegenhaltungen:
- EP-A- 0 819 516
- EP-A2- 0 549 116
- WO-A-00/63015
- DE-A1- 10 016 194
- DE-A1-3102004 055 36

## Beschreibung

Die Erfindung betrifft neue lackierte nachverformbare Folien, Lackkompositionen für diese Folien, ein kombiniertes Verfahren zur Härtung der Lackkompositionen und zur Nachverformung sowie aus den lackierten Folien hergestellte Formkörper.

Es sind Verfahren bekannt, bei denen zunächst eine Kunststofffolie großflächig beschichtet wird, dann zum Transport oder auch zur Aufbewahrung auf Rollen aufgewickelt und anschließend vor Ort in die gewünschte Endform gebracht wird. Besonders interessant wäre ein solches Vorgehen, wenn die Oberfläche schon direkt nach dem Umformen ohne weitere Beschichtungen die geforderten Eigenschaften wie Beständigkeit und Optik aufweisen würde. Dieses Konzept bietet viel Potential für die Herstellung z.B. von Fahrzeuganbauteilen durch Kunststoffverarbeiter, wo der aufwendigere Lackierschritt dreidimensionaler Bauteile durch die einfachere Beschichtung eines flächigen Substrats ersetzt werden könnte. Zudem kann durch die Verwendung einheitlicher Lackfolien das bei der separaten Lackierung (sogenannte Offline-Lackierung) von Fahrzeuganbauteilen häufig auftretende Problem vermieden werden, dass der Farbton der jeweiligen Lackschichten nicht identisch ist (Colourmatching).

In aller Regel setzen gute Oberflächeneigenschaften eine hohe Vemetzungsdichte der Beschichtung voraus. Hohe Vemetzungsdichten führen aber zu duromerem Verhalten mit maximal möglichen Verstreckungsgraden von nur wenigen Prozent, so dass die Beschichtung während des Umformvorganges zur Rißbildung neigt. Dieser offensichtliche Konflikt zwischen erforderlicher hoher Vernetzungsdichte und angestrebtem hohen Verstreckungsgrad kann auf unterschiedlichen Wegen gelöst werden, z.B. indem die Härtung in zwei Schritten, vor und nach der Umformung, durchgeführt wird.

Dies kann z.B. durch Trocknung/Härtung nach zwei unterschiedlichen Mechanismen realisiert werden.

Die EP-A 0 819 516 beschreibt ein Verfahren zum Lackieren eines Gegenstandes während eines Umformvorgangs mittels einer verformbaren, strahlungshärtbaren Lackfolie. Nachteilig ist dabei, dass aufgrund der tiefen Glasübergangstemperatur die Blockfestigkeit der lackierten Folie vor dem Verformen und Nachhärte nicht in ausreichendem Maß gegeben ist. Dies beeinträchtigt die Handhabung vor der Endhärtung erheblich und ist für die industrielle Anwendung von großem Nachteil, da solche Folien beispielsweise nicht oder nur unter Verwendung von Schutzfolien aufgerollt werden können, da sie sonst verbacken. Außerdem ist diesem Stand der Technik außer der Glasübergangstemperatur und der Nennung von Polymerklassen ("Phosphazene, Urethane, Acrylate") nicht zu entnehmen, wie die Komponenten eines Lacksystems beschaffen sein müssen, um thermoplastische Verformbarkeit und duromeres Verhalten, insbesondere Beständigkeiten gegen Witterung und Verkratzen nach der Endhärtung zu ermöglichen. Außerdem werden die erzielbaren Verstreckungsgrade nicht genannt.

Die WO 00/63015 beschreibt ebenfalls eine beschichtete verformbare Folie, die mittels Strahlung gehärtet werden kann. Durch Zusatz von polymeren Komponenten mit einer Glasübergangstemperatur oberhalb 40 °C wird eine verbesserte Blockfestigkeit vor der Verformung erreicht. Eine zweistufige Härtung wird zwar erwähnt ("Im Übrigen kann die strahlungshärtbare Masse neben strahlungshärtbaren Verbindungen auch noch Verbindungen enthalten, die durch andere chemische Reaktionen zur Härtung beitragen") aber es wird nicht nachvollziehbar beschrieben, wie derartige Systeme bereitgestellt werden können. Mehr hoch: In der präparativen Beschreibung besteht ein Widerspruch zwischen der Präparationstemperatur der strahlenhärtbaren Beschichtung in der Schmelze der polymeren Komponente "bei 160°C" und der später auf dem Substrat durchzuführenden thermischen Härtung bei "bis zu 150°C, vorzugsweise bis zu 130°C".

Zusammenfassend lässt sich feststellen, dass aus dem Stand der Technik Lacksysteme zur Beschichtung einer nachverformbaren Folie nicht bekannt sind, welche folgende Voraussetzungen erfüllen:
1) Einfache Applikation mit üblichen Methoden auf einer Folie oder einem Folienverbund
2) Thermische Härtung über einen Polyadditionsmechanismus, der zu einer blockfesten thermoplastischen lackierten Folie führt, die sich mit entsprechenden Werkzeugen nachverformen lässt.
3) Endhärtung des Lackes auf der verformten, lackierten Folie durch Strahlung, wobei Beständigkeitseigenschaften des Lacks erreicht werden, wie sie auch durch herkömmliche Lackierung bereits geformter Gegenstände erzielbar sind.

Die Bereitstellung derartiger Beschichtungssysteme ist die der vorliegenden Erfindung zugrundeliegende Aufgabe.

Es wurde gefunden, dass entsprechende lackierte Folien mit Verstreckungsgrad größer 50 % durch Beschichtung mit ausgewählten sogenannten Dual Cure Lacksystemen herstellbar sind, die vor dem Verformen durch Polyaddition von möglichst linearen Bestandteilen teilhärten und nach der Verformung durch Strahlung endhärten.

Gegenstand der Erfindung ist daher auch eine lackierte, nachverformbare Folie bestehend aus einer Substratfolie und mindestens einer aus einer erfindungsgemäßen Lackkomposition entstandenen Beschichtung. Weiterhin ist ein kombiniertes Verfahren zur Härtung der Lackkompositionen und zur Nachverformung, deren Verwendung sowie die aus den lackierten Folien hergestellte Formkörper Gegenstand der Erfindung.

Die erfindungsgemäßen Lackkompositionen zur Herstellung von nachverformbaren Substraten, welche durch Härtung mittels Polyadditionsreaktion zu einer blockfesten und thermoplastischen Schicht ausgehärtet sowie durch nachgeschaltete durch aktinische Strahlung ausgelöste Polymerisation endhärtet sind dadurch gekennzeichnet dass:
- keine Komponente im Sinne der Polyadditionsreaktion eine mittlere Funktionalität größer 2,8 aufweist und
- ein Verstreckungsgrad von mindestens 50 % erreicht werden kann ohne dass es zur Bildung von Rissen kommt.

Die erfindungsgemäßen Lackkompositionen können sowohl 100%ig fest oder flüssig, in organischen Lösemitteln gelöst als auch in wässriger Phase gelöst und/oder emulgiert zum Einsatz kommen.

Die erfindungsgemäßen Lackkompositionen enthalten:
A) Eine oder mehrere Isocyanate, die
   A1) keine ethylenisch ungesättigte Doppelbindungen enthalten und/oder
   A2) ethylenisch ungesättigte Doppelbindungen enthalten
   und
B) Eine oder mehrere isocyanat-reaktive Verbindungen, die
   B1) keine ethylenisch ungesättigten Doppelbindungen enthalten und/oder
   B2) ethylenisch ungesättigte Doppelbindungen enthalten,
   wobei zumindest eine der Komponenten A oder B ethylenisch ungesättigten Doppelbindungen enthalten müssen,
   sowie gegebenenfalls
C) ethylenisch ungesättigten Verbindungen, die keine zur Polyaddition geeignete chemische Funktionen aufweisen
D) Fotoinitiatoren
E) Additive wie Stabilisatoren, Katalysatoren und andere Hilfs- und Zusatzstoffe
F) Nichtfunktionelle Polymere und/oder Füllstoffe.

Geeignete chemische Funktionen a) und b) für die Polyaddition sind prinzipiell alle in der Beschichtungstechnologie üblicherweise verwendeten Funktionen. Insbesondere geeignet sind Isocyanat-Hydroxyl/Thiol/Amin, Carboxylat-Epoxid, Melamin-Hydrxoxyl, und Carbamat-Hydroxyl. Als Funktion a) sind ganz besonders bevorzugt Isocyanate auch in blockierter Form sowie als Funktion b) Hydroxyl, primäre und/oder sekundäre Amine sowie Asparaginat.

Als Isocyanate A werden aromatische, araliphatische, aliphatische und cycloaliphatische Di- oder Polyisocyanate verwendet. Es können auch Mischungen solcher Di- oder Polyisocyanate eingesetzt werden. Beispiele geeigneter Di- oder Polyisocyanate sind Butylendiisocyanat, Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)-methane und deren Mischungen beliebigen Isomerengehalts, Isocyanatomethyl-1,8-octandiisocyanat, 1,4-Cyclohexylendiisocyanat, die isomeren Cyclohexandimethylendiisocyanate, 1,4-Phenylendiisocyanat, 2,4- und/oder 2,6-Toluylendiisocyanat, 1,5-Naphthylendiisocyanat, 2,4'- oder 4,4'-Diphenylmethandiisocyanat, Triphenylmethan-4,4',4''-triisocyanat oder deren Derivate mit Urethan-, Harnstoff-, Carbodiimid-, Acylharnstoff-, Isocyanurat-, Allophanat-, Biuret-, Oxadiazintrion-, Uretdion-, Iminooxadiazindionstruktur und Mischungen derselben. Bevorzugt sind Polyisocyanate auf Basis oligomerisierter und/oder derivatisierter Diisocyanate, die durch geeignete Verfahren von überschüssigem Diisocyanat befreit wurden, insbesondere die des Hexamethylendiisocyanat, Isophorondiisocyanat und der isomeren Bis(4,4'-isocyanatocyclohexyl)methane sowie deren Mischungen. Bevorzugt sind die oligomeren Isocyanurate, Uretdione, Allophanate und Iminooxadiazindione des HDI, des IPDI und/oder der isomeren Bis(4,4'-isocyanatocyclohexyl)methane sowie deren Mischungen. Besonders bevorzugt sind die oligomeren Isocyanurate, Uretdione und Allophanate des IPDI sowie die oligomeren Isocyanurate der isomeren Bis(4,4'-isocyanatocyclohexyl)methane.

Es ist gegebenenfalls auch möglich, die vorgenannten Isocyanate A teilweise mit isocyanat-reaktiven ethylenisch ungesättigten Verbindungen umgesetzt zu verwenden. Bevorzugt werden hierzu α,β-ungesättigte Carbonsäurederivate wie Acrylate, Methacrylate, Maleinate, Fumarate, Maleimide, Acrylamide, sowie Vinylether, Propenylether, Allylether und Dicyclopentadienyl-Einheiten enthaltende Verbindungen, die mindestens eine gegenüber Isocyanaten reaktive Gruppe aufweisen, eingesetzt, besonders bevorzugt sind dies Acrylate und Methacrylate mit mindestens einer isocyanatreaktiven Gruppe. Als hydroxyfunktionelle Acrylate oder Methacrylate kommen beispielsweise Verbindungen wie 2-Hydroxyethyl(meth)acrylat, Polyethylenoxid-mono(meth)acrylate, Polypropylenoxidmono(meth)-acrylate, Polyalkylenoxidmono(meth)acrylate, Poly("epsilon"-caprolacton)mono(meth)-acrylate, wie z.B. Tone^{®} M100 (Dow, USA), 2-Hydroxypropyl(meth)acrylat, 4-Hydroxybutyl(meth)acrylat, 3-Hydroxy-2,2-dimethylpropyl(meth)acrylat, die hydroxyfunktionellen Mono-, Di- oder Tetra(meth)acrylate mehrwertiger Alkohole wie Trimethylolpropan, Glycerin, Pentaerythrit, Dipentaerythrit, ethoxiliertes, propoxiliertes oder alkoxyliertes Trimethylolpropan, Glycerin, Pentaerythrit, Dipentaerythrit oder deren technische Gemische in Betracht. Darüberhinaus sind isocyanat-reaktive oligomere oder polymere ungesättigte Acrylat- und/oder Methacrylatgruppen enthaltende Verbindungen alleine oder in Kombination mit den vorgenannten monomeren Verbindungen geeignet.

Es ist gegebenenfalls auch möglich, die vorgenannten Isocyanate A teilweise mit dem Fachmann aus der Beschichtungstechnologie bekannten Blockierungsmitteln umgesetzt zu verwenden. Als Beispiel für Blockierungsmittel seien genannt: Alkohole, Lactame, Oxime, Malonester, Alkylacetoacetate, Triazole, Phenole, Imidazole, Pyrazole sowie Amine, wie z.B. Butanonoxim, Diisopropylamin, 1,2,4-Triazol, Dimethyl-1,2,4-triazol, Imidazol, Malonsäurediethylester, Acetessigester, Acetonoxim, 3,5-Dimethylpyrazol, epsilon-Caprolactam, N-tert.-Butyl-benzylamin, Cyclopentanoncarboxyethylester oder beliebige Gemische dieser Blockierungsmittel.

Die mittlere Zahl der funktionellen Gruppen a) also z.B. der Isocyanatgruppen pro Molekül (Funktionalität) der eingesetzten Komponente A beträgt in jedem Fall < 2,8, bevorzugt zwischen 1,5 und 2,5, besonders bevorzugt zwischen 1,8 und 2,1.

Als Verbindungen der Komponente A1 können alle vorgenannten Di- oder Polyisocyanate A einzeln oder in beliebigen Mischungen verwendet werden, die keine ethylenisch ungesättigten Funktionen aufweisen.

Als Verbindungen der Komponente A2 können alle vorgenannten Verbindungen A einzeln oder in beliebigen Mischungen verwendet werden, die mindestens eine Isocyanatgruppe aufweist und zusätzlich mindestens eine ethylenisch ungesättigte Funktion aufweist, die unter Einwirkung aktinischer Strahlung mit ethylenisch ungesättigten Verbindungen unter Polymerisation reagiert.

Isocyanat-reaktive Verbindungen B sind monomere, oligomere oder polymere Verbindungen sowie Mischungen einer oder mehrerer dieser Verbindungen.

Geeignete Verbindungen der Komponente B sind niedermolekulare kurzkettige, d.h. 2 bis 20 Kohlenstoffatome enthaltende aliphatische, araliphatische oder cycloaliphatische Diole, Triole und/oder höhere Polyole. Beispiele für Diole sind Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, stellungsisomere Diethyloctandiole, 1,3-Butylenglykol, Cyclohexandiol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), 2,2-Dimethyl-3-hydroxypropionsäure(2,2-dimethyl-3-hydroxypropylester). Beispiele geeigneter Triole sind Trimethylolethan, Trimethylolpropan oder Glycerin. Geeignete höherfunktionelle Alkohole sind Ditrimethylolpropan, Pentaerythrit, Dipentaerythrit oder Sorbit. Bevorzugt sind aliphatische Diole, ganz besonders bevorzugt cycloaliphatische Diole.

Geeignet sind auch höhermolekulare aliphatische und cycloaliphatische Polyole wie Polyesterpolyole, Polyetherpolyole, Polycarbonatpolyole, hydroxyfunktionelle Acrylharze, hydroxyfunktionelle Polyurethane, hydroxyfunktionelle Epoxyharze oder entsprechende Hybride (vgl. Römpp Lexikon Chemie, S.465-466, 10. Aufl. 1998, Georg-Thieme-Verlag, Stuttgart). Bevorzugt sind (cyclo)aliphatische Polyesterpolyole und/oder (cyclo)aliphatische Polycarbonatpolyole, ganz besonders bevorzugt sind solche Polyester- und/oder Polycarbonatpolyole, die verzweigt linear aliphatische Diole enthalten.

Weiterhin können als Verbindungen der Komponente B alle Verbindungen einzeln oder in beliebigen Mischungen verwendet werden, die mindestens eine gegenüber Isocyanaten reaktive Gruppe und mindestens eine ungesättigte Funktion aufweisen, die unter Einwirkung aktinischer Strahlung mit ethylenisch ungesättigten Verbindungen unter Polymerisation reagiert.

Bevorzugt werden α,β-ungesättigte Carbonsäurederivate wie Acrylate, Methacrylate, Maleinate, Fumarate, Maleimide, Acrylamide, sowie Vinylether, Propenylether, Allylether und Dicyclopentadienyl-Einheiten enthaltende Verbindungen, die mindestens eine gegenüber Isocyanaten reaktive Gruppe aufweisen, eingesetzt, besonders bevorzugt sind dies Acrylate und Methacrylate mit mindestens einer isocyanatreaktiven Gruppe.

Als hydroxyfunktionelle Acrylate oder Methacrylate kommen beispielsweise in Betracht Verbindungen wie 2-Hydroxyethyl(meth)acrylat, Polyethylenoxid-mono(meth)acrylate, Polypropylenoxidmono(meth)acrylate, Polyalkylenoxidmono(meth)acrylate, Poly(ε-caprolacton)mono(meth)acrylate, wie z.B. Tone^{®} M100 (Dow, Schwalbach, DE), 2-Hydroxypropyl(meth)acrylat, 4-Hydroxybutyl(meth)acrylat, 3-Hydroxy-2,2-dimethylpropyl(meth)-acrylat, die hydroxyfunktionellen Mono-, Di- oder Tetraacrylate mehrwertiger Alkohole wie Trimethylolpropan, Glycerin, Pentaerythrit, Dipentaerythrit, ethoxiliertes, propoxiliertes oder alkoxyliertes Trimethylolpropan, Glycerin, Pentaerythrit, Dipentaerythrit oder deren technische Gemische.

Darüberhinaus sind isocyanat-reaktive oligomere oder polymere ungesättigte Acrylat- und/oder Methacrylatgruppen enthaltende Verbindungen alleine oder in Kombination mit den vorgenannten monomeren Verbindungen geeignet.

Die Herstellung von Polyesteracrylaten wird in der DE-A 4 040 290 (S.3, Z. 25 - S.6, Z. 24), DE-A 3 316 592 (S. 5, Z. 14 - S. 11, Z. 30) und P. K. T. Oldring (Ed.), Chemistry & Technology of UV & EB Formulations For Coatings, Inks & Paints, Vol. 2, 1991, SITA Technology, London, S. 123 - 135, beschrieben.

Ebenfalls verwendet werden können die an sich bekannten hydroxylgruppenhaltigen Epoxy(meth)acrylate mit OH-Gehalten von 20 bis 300 mg KOH/g oder hydroxylgruppenhaltige Polyurethan(meth)acrylate mit OH-Gehalten von 20 bis 300 mg KOH/g oder acrylierte Polyacrylate mit OH-Gehalten von 20 bis 300 mg KOH/g sowie deren Mischungen untereinander und Mischungen mit hydroxylgruppenhaltigen ungesättigten Polyestern sowie Mischungen mit Polyester(meth)acrylaten oder Mischungen hydroxylgruppenhaltiger ungesättigter Polyester mit Polyester(meth)acrylaten. Solche Verbindungen werden ebenfalls in P. K. T. Oldring (Ed.), Chemistry & Technology of UV & EB Formulations For Coatings, Inks & Paints, Vol. 2, 1991, SITA Technology, London S 37 - 56 beschrieben. Bevorzugt sind Polyesteracrylate mit definierter Hydroxyfunktionalität.

Hydroxylguppenhaltige Epoxy(meth)acrylate basieren insbesondere auf Umsetzungsprodukten von Acrylsäure und/oder Methacrylsäure mit Epoxiden (Glycidylverbindungen) von monomeren, oligomeren oder polymeren Bisphenol-A, Bisphenol-F, Hexandiol und/oder Butandiol oder deren ethoxilierten und/oder propoxilierten Derivaten. Bevorzugt sind weiterhin Epoxyacrylate mit definierter Funktionalität wie sie aus der Umsetzung einer ggf. ungesättigten Disäure wie Fumarsäure, Maleinsäure, Hexahydrophthalsäure oder Adipinsäure und Glycidyl(meth)acrylat. Aliphatische Epoxyacrylate sind besonders bevorzugt. Acrylierte Polyacrylate können beispielsweise durch Umsetzung von glycidylfunktionellen Polyacrylaten mit (Meth)acrylsäure hergestellt werden.

Die Isocyanat-reaktive Komponente B weist im Mittel je Molekül nicht mehr als 2,6, bevorzugt zwischen 2,3 und 1,7, besonders bevorzugt zwischen 2,1 und 1,85 mit Isocyanaten reaktive Gruppen auf.

Als Verbindungen der Komponente B1 können alle vorgenannten Isocyanat-reaktiven Verbindungen B einzeln oder in beliebigen Mischungen verwendet werden, die keine ethylenisch ungesättigten Funktionen aufweisen.

Als Verbindungen der Komponente B2 können alle vorgenannten Verbindungen B einzeln oder in beliebigen Mischungen verwendet werden, die mindestens eine Isocyanat-reaktive Gruppe aufweisen und zusätzlich mindestens eine ethylenisch ungesättigte Funktion aufweisen, die unter Einwirkung aktinischer Strahlung mit ethylenisch ungesättigten Verbindungen unter Polymerisation reagiert.

Als Komponente C kommen eine oder mehrere monomere oder polymere Verbindungen in frage, die mindestens eine funktionelle Gruppen tragen, die durch Einwirkung aktinischer Strahlung mit ethylenisch ungesättigten Verbindungen unter Polymerisation reagieren und die weder Isocyanat-Gruppen noch Isocyanat-reaktive Gruppen aufweisen. Solche Verbindungen sind beispielsweise Ester, Carbonate, Acrylate, Ether, Urethane oder Amide oder polymere Verbindungen dieser Strukturtypen. Es können auch beliebige Mischungen solcher Monomere und/oder Polymere eingesetzt werden, die mindestens eine unter Einwirkung aktinischer Strahlung polymerisierbare Gruppe enthalten.

Als Verbindungen der Komponente C können modifizierte Monomere oder Polymere eingesetzt werden, deren Modifizierung nach an sich bekannten Methoden erfolgt. Bei der Modifizierung werden entsprechende chemische Funktionalitäten in die Moleküle eingefügt. Geeignet sind α,β-ungesättigte Carbonsäurederivate wie Acrylate, Methacrylate, Maleinate, Fumarate, Maleimide, Acrylamide, weiterhin Vinylether, Propenylether, Allylether und Dicyclopentadienyl-Einheiten enthaltende Verbindungen. Bevorzugt sind Vinylether, Acrylate und Methacrylate, besonders bevorzugt sind Acrylate. Beispiele beinhalten die in der Technologie der Strahlenhärtung bekannten Reaktivverdünner (vgl. Römpp Lexikon Chemie, S.491, 10. Aufl. 1998, Georg-Thieme-Verlag, Stuttgart) oder die in der Technologie der Strahlenhärtung bekannten Bindemittel wie Polyetheracrylate, Polyesteracrylate, Urethanacrylate, Epoxyacrylate, Melaminacrylate, Silikonacrylate, Polycarbonatacrylate und acrylierte Polyacrylate.

Geeignete Ester werden üblicherweise durch Veresterung von Alkoholen mit 2 bis 20 Kohlenstoffatomen, bevorzugt mehrwertigen Alkoholen mit 2 bis 20 Kohlenstoffatomen, mit ungesättigten Säuren oder ungesättigten Säurechloriden erhalten, bevorzugt Acrylsäure und deren Derivate. Dazu können die dem Fachmann bekannten Methoden der Veresterung angewendet werden.

Geeignete Alkoholkomponenten bei der Veresterung sind einwertige Alkohole wie die isomeren Butanole, Pentanole, Hexanole, Heptanole, Octanole, Nonanole und Decanole, weiterhin cycloaliphatische Alkohole wie Isobornol, Cyclohexanol und alkylierte Cyclohexanole, Dicyclopentanol, arylaliphatische Alkohole wie Phenoxyethanol und Nonylphenylethanol, sowie Tetrahydrofurfurylalkohole. Ebenfalls geeigne sind Zweiwertige Alkohole wie Ethylenglykol, Propandiol-1,2, Propandiol-1,3, Diethylenglykol, Dipropylenglykol, die isomeren Butandiole, Neopentylglykol, Hexandiol-1,6, 2-Ethylhexandiol, 1,4-Cyclohexandiol, 1,4-Cyclohexandimethanol und Tripropylenglykol: Geeignete höherwertige Alkohole sind Glycerin, Trimethylolpropan, Ditrimethylolpropan, Pentaerythrit oder Dipentaerythrit. Bevorzugt sind Diole und höherwertige Alkohole, besonders bevorzugt sind Glycerin, Trimethylolpropan, Pentaerythrit, Dipentaerythrit und 1,4-Cyclohexandimethanol.

Geeignete Ester bzw. Urethane sind beispielsweise auch durch Umsetzung ungesättigter OH-funktioneller, ungesättigter Verbindungen mit 2 bis 12, vorzugsweise 2 bis 4 Kohlenstoffatomen mit Säuren, Estern, Säureanhydriden oder Säurechloriden bzw. Isocyanaten zugänglich.

Als hydroxyfunktionelle Acrylate oder Methacrylate kommen beispielsweise in Betracht Verbindungen wie 2-Hydroxyethyl(meth)acrylat, Polyethylenoxid-mono(meth)acrylate, Polypropylenoxidmono(meth)acrylate, Polyalkylenoxidmono(meth)acrylate, Poly(s-caprolacton)mono(meth)acrylate, wie z.B. Tone^{®} M100 (Dow, Schwalbach, DE), 2-Hydroxypropyl(meth)acrylat, 4-Hydroxybutyl(meth)acrylat, 3-Hydroxy-2,2-dimethylpropyl(meth)-acrylat, die hydroxyfunktionellen Mono-, Di- oder Tetraacrylate mehrwertiger Alkohole wie Trimethylolpropan, Glycerin, Pentaerythrit, Dipentaerythrit, ethoxiliertes, propoxiliertes oder alkoxyliertes Trimethylolpropan, Glycerin, Pentaerythrit, Dipentaerythrit oder deren technische Gemische.

Beispiele für bevorzugte ungesättigte OH-funktionelle Verbindungen sind Hydroxyethyl-(meth)acrylat, 2- und 3-Hydroxypropyl(meth)acrylat, 2-, 3- und 4-Hydroxy-butyl-(meth)-acrylat, weiterhin OH funktionelle Vinylether, wie z.B. Hydroxybutylvinylether sowie deren Mischungen.

Desweiteren können als OH-funktionelle ungesättigte Verbindungen OH-funktionelle (Meth)acrylsäureester bzw. -amide eingesetzt werden, die durch Umsetzung von bis zu n-1 Äquivalenten (Meth)acrylsäure mit n-wertigen Alkoholen, Aminen, Aminoalkoholen und/oder deren Gemischen erhältlich sind. Als n-wertige Alkohole kommen dabei Glycerin, Trimethylolpropan und/oder Pentaerythrit in frage.

Ebenfalls können Produkte aus der Umsetzung von epoxyfunktionellen (Meth)acrylsäurester mit (Meth)Acrylsäure verwendet werden. So ergibt die Umsetzung von Glycidylmethacrylat mit Acrylsäure einen gemischten Acrylsäure- Methacrylsäureester des Glycerins, der besonders vorteilhaft verwendet werden kann.

Zur Darstellung von Urethanen aus diesen OH-funktionellen ungesättigten Verbindungen können Mono-, Di- oder Polyisocyanate verwendet werden. Dazu eignen sich isomere Butylisocyanate, Butylendiisocyanat, Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, Isocyanatomethyl-1,8-octandiisocyanat, 1,4-Cyclohexylendiisocyanat, die isomeren Cyclohexandimethylendiisocyanate, 1,4-Phenylendiisocyanat, 2,4- und/oder 2,6-Toluylendiisocyanat, 1,5-Naphthylendiisocyanat, 2,4'- oder 4,4'-Diphenylmethandiisocyanat, Triphenylmethan-4,4',4"-triisocyanat oder deren Derivate mit Urethan-, Harnstoff-, Carbodiimid-, Acylharnstoff-, Isocyanurat-, Allophanat-, Biuret-, Oxadiazintrion-, Uretdion-, Iminooxadiazindionstruktur und Mischungen derselben. Bevorzugt sind Polyisocyanate auf Basis oligomerisierter und/oder derivatisierter Diisocyanate, die durch geeignete Verfahren von überschüssigem Diisocyanat befreit wurden, insbesondere die des Hexamethylendiisocyanat, Isophorondiisocyanat und der isomeren Bis(4,4'-isocyanatocyclohexyl)methane sowie deren Mischungen. Bevorzugt sind die oligomeren Isocyanurate, Uretdione, Allophanate und Iminooxadiazindione des HDI, die oligomeren Isocyanurate, Uretdione und Allophanate des IPDI sowie die oligomeren Isocyanurate der isomeren Bis(4,4'-isocyanatocyclohexyl)methane sowie deren Mischungen.

Analog der obigen Beschreibung sind geeignete Polyester, Polycarbonate oder Polyurethane beispielsweise durch Umsetzung ungesättigter OH-funktioneller Verbindungen mit 2 bis 12, vorzugsweise 2 bis 4 Kohlenstoffatomen mit beispielsweise Säure-, Ester- oder Säurechlorid-funktionellen Polyestern oder Polycarbonaten oder NCO-funktionellen Polyurethanen zugänglich.

Geeignet sind auch Umsetzungsprodukte von Polyestern mit Säurezahlen >5 und glycidylfunktionellen (Meth-)acrylaten (z.B. Glycidylmethacrylat).

Bevorzugt als OH-funktionelle ungesättigte Verbindungen zum Aufbau ungesättigter Polyester, Polycarbonate und Polyurethane sind Hydroxyethylacrylat und die isomeren Hydroxypropylacrylate. Besonders bevorzugt ist das Umsetzungprodukt aus Glycidylmethacrylat und Acrylsäure.

Polyacrylate können nur nach der Polymerisation der Acrylat- und Vinylaromatenmonomere strahlenhärtend modifiziert werden. Dies gelingt über funktionelle Gruppen, die inert gegenüber den Herstellungsbedingungen des Polyacrylats sind und anschließend erst zu ungesättigten strahlenhärtenden Gruppen weiter modifiziert werden. Geeignete Gruppen hierzu sind beispielsweise die in der folgenden Tabelle aufgeführten:

| Inerte Gruppe | Modifizierungsreagenz | Strahlenhärtende Gruppe |
|---|---|---|
| Epoxy | Acrylsäure, dimere Acrylsäure | Acrylat |
| Säure | Glycidylmethacrylat | Methacrylat |
| Säure | Hydroxyalkylacrylat | Acrylat |
| Alkohol | Maleinsäureanhydrid | Maleinat |
| Alkohol | Acrylsäure, dimere Acrylsäure | Acrylat |
| Alkohol | Acrylfunktionelles Isocyanat | Urethanacrylat |
| Isocyanat | Hydroxyalkylacrylat | Urethanacrylat |
| Anhydrid | Hydroxyalkylacrylat | Acrylat |

Fotoinitiatoren D sind durch aktinische Strahlung aktivierbare Initiatoren, die eine radikalische Polymerisation der entsprechenden polymerisierbaren Gruppen auslösen. Fotoinitiatoren sind an sich bekannte, kommerziell vertriebene Verbindungen, wobei zwischen unimolekularen (Typ I) und bimolekularen (Typ II) Initiatoren unterschieden wird. (Typ I)-Systeme sind z.B. aromatische Ketonverbindungen, z.B. Benzophenone in Kombination mit tertiären Aminen, Alkylbenzophenone, 4,4'-Bis(dimethylamino)benzophenon (Michlers Keton), Anthron und halogenierte Benzophenone oder Mischungen der genannten Typen. Weiter geeignet sind (Typ II)-Initiatoren wie Benzoin und seine Derivate, Benzilketale, Acylphosphinoxide z.B. 2,4,6-Trimethyl-benzoyl-diphenylphosphinoxid, Bisacylophosphinoxide, Phenylglyoxylsäureester, Campherchinon, α-Aminoalkylphenone, α,α-Dialkoxyacetophenone und α-Hydroxyalkylphenone. Es kann vorteilhaft sein auch Gemische dieser Verbindungen einzusetzen. Je nach zur Härtung verwendeter Strahlungsquelle muss Typ und Konzentration an Photoinitiator in dem Fachmann bekannter Weise angepasst werden. Näheres ist zum Beispiel in P. K. T. Oldring (Ed.), Chemistry & Technology of UV & EB Formulations For Coatings, Inks & Paints, Vol. 3, 1991, SITA Technology, London, S. 61 - 328 beschrieben.

Als Komponente E können in der Technologie der Lacke, Farben, Druckfarben, Dichtstoffe und Klebstoffe übliche Zusätze oder Hilfsmittel enthalten sein.

Insbesondere sind dies Stabilisatoren, Lichtschutzmittel wie UV-Absorber und sterisch gehinderte Amine (HALS), weiterhin Antioxidantien sowie Lackhilfsmittel, z.B. Antiabsetzmittel, Entschäumungs- und/oder Netzmittel, Verlaufmittel, Weichmacher, Katalysatoren, Hilfslösemittel und/oder Verdicker sowie Pigmente, Farbstoffe und/oder Mattierungsmittel. Der Einsatz von Lichtschutzmitteln und die verschiedenen Typen sind beispielhaft beschrieben in A. Valet, Lichtschutzmittel für Lacke, Vincentz Verlag, Hannover, 1996

Als Komponente F können unfunktionelle Polymere und Füllstoffe zur Einstellung der mechanischen und optischen Eigenschaften enthalten sein. Hierzu eignen sich alle Polymere und Füllstoffe, die mit dem Beschichtungsmittel verträglich und mischbar sind. Die Verbindungen der Komponente F können sowohl als Bulkmaterial als auch in Form von Partikeln mit mittleren Durchmessern im Bereich zwischen einem und 10000 Nanometern, bevorzugt im Bereich von einem bis 500 Nanometern, besonders bevorzugt im Bereich von zwei bis 200 Nanometern, eingesetzt werden.

Als Polymere Zusatzstoffe kommen Polymere wie beispielsweise Polyacrylate, Polycarbonate, Polyurethane, Polyolefine, Polyether, Polyester, Polyamide und Polyharnstoffe in Frage.

Als Füllstoffe können mineralische Füllstoffe, Glasfasern und/oder metallische Füllstoffe, wie sie in gängigen Rezepturen für sog. Metalliclackierungen zum Einsatz kommen, verwendet werden.

Die Substratfolie für das erfindungsgemäße Beschichtungsmittel dient als Trägermaterial für das gebildete Verbundmaterial und muss neben allgemeinen Beständigkeitsanforderungen vor allem die nötige thermische Verformbarkeit besitzen. Prinzipiell geeignet sind daher thermoplastische Polymere, insbesondere Polyacrylate, Polymethacrylate, thermoplastische Polyurethane, Polyester, Polyether, Polyolefine, Polyamide, Copolymere unterschiedlicher Polymere sowie Blends unterschiedlicher Polymere.

Besonders geeignet sind thermoplastische Polyurethane, Polymethylmethacrylat (PMMA) sowie modifizierte Varianten von PMMA, Polycarbonate, Acrylstyrolacrylnitrilcopolymere (ASA) sowie Mischungen dieser Polymere.

Die Substratfolie wird bevorzugt in Form von Folien mit einer Dicke von 50 bis 5000 µm, bevorzugt 200 bis 2000 µm verwendet. Optional kann das Polymer der Substratschicht Additive enthalten wie z.B. Stabilisatoren, Füllstoffe wie Fasern und Farbstoffe enthalten.

Auf der Rückseite der Substratfolie, d.h. auf der Oberfläche, auf der das Beschichtungsmittel nicht aufgebracht wird, kann optional eine thermisch verformbare Klebstoffschicht aufgebracht sein. Hierzu eignen sich je nach Vorgehensweise bevorzugt Schmelzkleber bzw. strahlungshärtende Kleber. Zusätzlich kann auf der Oberfläche der Klebeschicht noch eine Schutzfolie aufgebracht werden, die ebenfalls thermisch verformbar ist.

Die Folie kann ggf. zusätzlich mit thermoplastischen Lackschichten z.B. Haftprimern, farb- und/oder effektgebenden Basislacken beschichtet sein. Das erfindungsgemäße Beschichtungsmittel wird dann nicht unmittelbar auf die Folie, sondern auf die schon nach gängigen Methoden aufgebrachten und getrockneten thermoplastischen Lackschichten appliziert.

Unter einer Härtung mittels Polyadditionsreaktion versteht man eine Polyreaktion bei der sich durch vielfach wiederholte Addition von di- oder polyfunktionellen Monomeren ein polymeres Produkt bildet wobei die Additionsreaktion ohne Abspaltung einer niedermolekularen Verbindung abläuft (s. Elias, Makromoleküle, 5. Aufl., Bd.1, S. 220 ff., Hüthig u. Wepf, Basel, 1990). Polyadditionsreaktionen sind beispielsweise die Bildung von Polyharnstoffen, Polyurethanen und die Reaktionen von Epoxidharzen mit Di- oder Polyaminen. Erfindungsgemäß bevorzugt ist die Härtung durch Bildung von Polyurethanen aus Isocyanaten A und Isocyanat-reaktiven Komponenten B.

Als blockfest wird eine Beschichtung bezeichnet, die keine Neigung zum Verkleben mit sich selbst aufweist (s. Zorll (Hrsg.), Römpp Lexikon Lacke und Druckfarben, 10. Aufl., S. 81, Georg Thieme Verlag, Stuttgart, 1998).

Als thermoplastisch wird ein Stoff bezeichnet, der oberhalb der Gebrauchstemperatur einen reversiblen Erweichungspunkt oder -bereich aufweist, oberhalb dessen er mechanisch verformt werden kann, wobei die neue Form nach dem Abkühlen des Stoffes unterhalb des Erweichungspunkts oder -bereichs erhalten bleibt. In der Regel setzt thermoplastisches Verhalten polymerer Stoffe eine lineare und/oder verzweigte Struktur der polymeren Einheiten voraus. Vernetzte Polymere zeigen dagegen schon bei geringen Vernetzungsgraden kein thermoplastisches Verhalten mehr, sondern verhalten sich duromer, d.h. sie sind thermisch gar nicht oder nur noch in geringem Maße verformbar.

Unter Härtung mit aktinischer Strahlung versteht man die radikalische Polymerisation von ethylenisch ungesättigten Kohlenstoff-Kohlenstoff-Doppelbindungen mittels Initiatorradikalen, die durch Bestrahlung mit aktinischer Strahlung beispielsweise aus den oben beschriebenen Fotoinitiatoren freigesetzt werden.

Die Erfindung betrifft auch ein kombiniertes Verfahren zur Härtung der Lackkompositionen und zur Nachverformung des erfindungsgemäßen Beschichtungsmittels.

Zunächst wird erfolgt die Applikation des erfindungsgemäßen Beschichtungsmittels auf die Substratfolie (Folie) nach gängigen Methoden wie Rakeln, Walzen, Spritzen oder Drucken. Die applizierten Schichtdicken (vor der Härtung) liegen typischerweise zwischen 0,5 und 5000 µm, bevorzugt zwischen 5 und 1000 µm, besonders bevorzugt zwischen 15 und 200 µm. Bei Verwendung von Lösungsmitteln wird dieses nach der Applikation durch die gängigen Methoden entfernt.

Daran schließt sich ein erster Härtungsschritt an, bei dem eine thermische Polyadditionsreaktion ausgelöst wird. Durch die definierte Funktionalität der Komponenten A und B des Beschichtungsmittels entsteht dabei eine blockfeste Beschichtung mit thermoplastischen Eigenschaften.

Ggf. kann vor oder nach dem ersten Härtungsschritt auf die beschichtete Oberfläche noch eine thermisch verformbare Schutzfolie aufgebracht werden, insbesondere dann, wenn eine Substratfolie verwendet wird, die auf der beschichteten Oberfläche gegenüberliegenden Oberfläche eine Klebeschicht aufweist.

Nach dem ersten Härtungsschritt kann die beschichtete Folie ggf. aufgerollt werden, ohne dass es zum Verkleben der Beschichtung mit der Rückseite der Substratfolie kommt. Es ist aber auch möglich die beschichtete Folie zuzuschneiden und die Zuschnitte einzeln oder als Stapel der Weiterverarbeitung zuzuführen.

Nach dem ersten Härtungsschritt oder ggf. nach dem Aufrollen kann die beschichtete Folie durch thermisches Verformen in die gewünschte Endform gebracht werden. Dies kann nach gängigen Verfahren wie Tiefziehen, Vakuum-Tiefziehen, Pressen, Blasverformen erfolgen (s. Lechner (Hrsg.) Makromolekulare Chemie, S. 384 ff., Verlag Birkenhäuser, Basel, 1993). Außerdem kann die beschichtete Folie ggf. im erwärmten Zustand zur Beschichtung von Gegenständen verwendet werden. Dabei kann ggf. eine Klebschicht als Haftvermittler zwischen Folie und dem zu beschichtenden Gegenstand eingesetzt werden.

Nach dem Verformungsschritt wird die Beschichtung der beschichteten Folie durch Bestrahlung mit aktinischer Strahlung endgehärtet. Die Strahlungshärtung erfolgt bevorzugt durch Einwirkung energiereicher Strahlung, also UV-Strahlung oder Tageslicht, z.B. Licht der Wellenlänge 200 bis 750 nm, oder durch Bestrahlen mit energiereichen Elektronen (Elektronenstrahlung, 90 bis 300 keV). Als Strahlungsquellen für Licht oder UV-Licht dienen beispielsweise Mittel- oder Hochdruckquecksilberdampflampen, wobei der Quecksilberdampf durch Dotierung mit anderen Elementen wie Gallium oder Eisen modifiziert sein kann. Laser, gepulste Lampen (unter der Bezeichnung UV-Blitzlichtstrahler bekannt), Halogenlampen oder Eximerstrahler sind ebenfalls einsetzbar. Die Strahler können ortsunbeweglich installiert sein, so dass das zu bestrahlende Gut mittels einer mechanischen Vorrichtung an der Strahlungsquelle vorbeibewegt wird, oder die Strahler können beweglich sein, und das zu bestrahlende Gut verändert bei der Härtung seinen Ort nicht. Die üblicherweise zur Vernetzung ausreichende Strahlungsdosis bei UV-Härhzng liegt im Bereich von 80 bis 5000 mJ/cm².

Die Bestrahlung kann gegebenenfalls auch unter Ausschluss von Sauerstoff, z.B. unter Inertgas-Atmosphäre oder Sauerstoff-reduzierter Atmosphäre durchgeführt werden. Als Inertgase eignen sich bevorzugt Stickstoff, Kohlendioxid, Edelgase oder Verbrennungsgase. Des weiteren kann die Bestrahlung erfolgen, indem die Beschichtung mit für die Strahlung transparenten Medien abgedeckt wird. Beispiele hierfür sind z.B. Kunststofffolien, Glas oder Flüssigkeiten wie Wasser.

Je nach Strahlungsdosis und Aushärtungsbedingungen sind Typ und Konzentration des gegebenenfalls verwendeten Initiators in dem Fachmann bekannter Weise oder durch orientierende Vorversuche zu variieren bzw. zu optimieren. Zur Härtung der verformten Folien ist es besonders vorteilhaft, die Härtung mit mehreren Strahlern durchzuführen, deren Anordnung so zu wählen ist, dass jeder Punkt der Beschichtung möglichst die zur Aushärtung optimale Dosis und Intensität an Strahlung erhält. Insbesondere sind nicht bestrahlte Bereiche (Schattenzonen) zu vermeiden.

Besonders bevorzugt werden zur Härtung Quecksilberstrahler in ortsfesten Anlagen eingesetzt. Fotoinitiatoren werden dann in Konzentrationen von 0,1 bis 10, besonders bevorzugt 0,2 bis 3,0 Gew.-% bezogen auf den Festkörper der Beschichtung eingesetzt. Zur Härtung dieser Beschichtungen wird bevorzugt eine Dosis von 500 bis 4000 mJ/cm², gemessen im Wellenlängebereich von 200 bis 600 nm, verwendet.

Die verformte beschichtete Folie kann vor oder nach der Endhärtung durch Hinterspritzen oder auch Hinterschäumen mit gegebenenfalls gefüllten Polymeren wie Thermoplasten oder auch reaktiven Polymeren wie zwei Komponenten Polyurethansystemen modifiziert werden. Dabei kann ggf. eine Klebschicht als Haftvermittler eingesetzt werden.

Verwendung der lackierten Folie bzw. der daraus hergestellten Formkörper:

Die verformten, lackierten bzw. beschichteten Folien lassen sich prinzipiell verwenden wie nichtlackierte oder nach dem Verformen lackierte Folien. Insbesondere können transparente oder teilweise transparente verformte lackierte Folien zur Herstellung von Bildschirmen, Anzeigen oder Displays in elektronischen Geräten verwendet werden. Weiterhin als Etiketten oder Schilder, beispielsweise mit teilweise erhabenen oder vertieften Regionen, wie z.B. Automobilkennzeichen, aber auch zur Herstellung von Kreditkarten oder anderen Karten, bei denen die dreidimensionale Struktur als Sicherheitsmerkmal Verwendung findet. Weiterhin können sie als Ersatz für geprägtes Metall z.B. für hochwertige Verpackungen dienen.

Die hinterspritzten oder hinterschäumten Formkörper lassen sich prinzipiell ebenfalls verwenden wie entsprechend geformte lackierte oder nichtlackierte Kunststoffteile. Die erfindungsgemäßen Formkörper lassen sich insbesondere dann vorteilhaft verwenden, wenn ein Kunststoffbauteil von seiner Funktion die vorteilhaften Eigenschaften (Optik, Resistenz, Kratz- und Abriebfestigkeit) einer hochwertigen Lackierung benötigt, auf eine nachträgliche Lackierung aus Kostengründen jedoch verzichtet wird. Insbesondere sind das Gehäuse von Elektrokleingeräten wie Mobiltelefone oder Telefone, Rasierapparate und Computer, insbesondere tragbare Geräte, die besonderen Belastungen ausgesetzt sind. Vorteilhaft finden die Formkörper Verwendung im Fahrzeug- oder Flugzeugbau, insbesondere als Automobilanbauteile oder Karosserieteile.

### Beispiele

Säurezahl: Angabe mg KOH / g Probe, Titration mit 0,1 mol/l NaOH-Lösung gegen Bromthymolblau (ethanolische Lösung), Farbumschlag von gelb über grün nach blau, Grundlage DIN 3682.

Hydroxylzahl: Angabe in mg KOH / g Probe, Titration mit 0,1 mol/l meth. KOH-Lösung nach kalter Acetylierung mit Essigsäureanhydrid unter Katalyse von Dimethylaminopyridin, Grundlage DIN 53240.

Isocyanatgehalt: Angabe in %, Rücktitration mit 0,1 mol/l Salzsäure nach Reaktion mit Butylamin, Grundlage DIN EN ISO 11909.

Gelpermeationschromatographie (GPC): Elutionsmittel THF, RI-Detektion, Integration nach Eichung mit Polystyrolstandards.

Viskositäten: Rotationsviskosimeter (Fa. Haake, Typ VT 550), Messungen bei 23°C.

Wenn nicht anderweitig vermerkt handelt es sich bei %-Angaben um Gew.-%.

### Komponenten eines Beschichtungsmittels

### Beispiel 1: Herstellung eines Isocyanatoacrylats

9000 g 4,4'-(2,4'-)Diisocyanatodicyclohexylmethan wurden in einem Planschliffgefäß mit Rührer, Rückflußkühler, Stickstoffüberleitung, Innenthermometer und Tropftrichter unter Stickstoff vorgelegt. Anschließend wurde auf 60 °C erwärmt und 28,0 g einer 5 %igen Lösung von Trimethyl-benzylammoniumhydroxid, gelöst in n-Butanol/Methanol = 12:1, langsam zudosiert, wobei die Temperatur so lange zwischen 60 und 80 °C gehalten wurde, bis der NCO-Gehalt der Rohlösung zwischen 25,5 und 25,8 % lag. Anschließend wurden 21,0 g einer 5 %igen Lösung von Dibutylphosphat in 4,4'-(2,4'-)Diisocyanatodicyclohexylmethan zugegeben, abgekühlt und mit 450 g eines handelsüblichen Isocyanuratpolyisocyanats auf Basis von Diisocyanatohexan (HDI) (NCO = 21,8 %, Viskosität = 3000 mPas/23 °C, monomeres HDI = 0,1 %) versetzt und bei 200 °C/0,15 mbar durch Dünnschichtdestillation monomeres 4,4'-(2,4'-)Diisocyanatodicyclohexylmethan abgetrennt. 1894,52 g des so erhaltenen Festharzes (NCO = 15,0 %) wurden entnommen und in einem weiteren Mehrhalskolben mit Rückflusskühler, Tropftrichter, Innenthermometer, Rührer und Luftdurchleitung (6 L/h) zusammen mit 975,00 g Butylacetat, 3,176 g Dibutylzinndilaurat und 3,18 g 2,6-Di-tert.butyl-4-methylphenol vorgelegt und unter Rühren auf 60 °C aufgeheizt. 374,12 g Hydroxyethylacrylat wurden anschließend langsam zugetropft, wobei eine maximale Temperatur von 65 °C erreicht wurde. Danach wurde das Reaktionsgemisch so lange bei 60 °C gerührt, bis ein NCO-Gehalt ≤ 4,4 % erreicht wurde.

Kennzahlen nach 24 h Lagerung bei RT:

| | Viskosität | Festgehalt | NCO-Gehalt | NCO-Funktionalität* | Farbzahl (APHA) |
|---|---|---|---|---|---|
| Beispiel 1 | 7.200 mPas | 75,3 % | 4,2 % | 1,9 | 22 |

| | | | | | |
|---|---|---|---|---|---|
| * - Bestimmung der NCO-Funktionalität erfolgte durch Auswertung der GPC an der Rohlösung des Trimeren des Diisocyanatocdicyclohexymethan und des HDI Isocyanuratpolyisocyanats durch Integration der Trimeren, Pentameren, Heptameren und Nonameren-Signale. Von der sich durch die Mischung ergebenden rechnerischen Funktionalität an Isocyanatgruppen wurde der Anteil, der durch Umsetzung mit Hydroxyethylacrylat verbraucht wird, abgezogen. Die rechnerisch verbleibende NCO-Funktionalität wurde angegeben. | | | | | |

### Beispiel 2: Herstellung eines Isocyanatoacrylats

In einem Mehrhalskolben mit Rückflusskühler, Rührer, Tropftrichter, Innenthermometer und Luftdurchleitung (2 1/h) wurden 552,0 g eines handelsüblichen Isocyanuratpolyisocyanats auf Basis von Diisocyanatohexan (HDI) (NCO-Gehalt: 23,4 Gew.-%, Viskosität 1200 mPa s bei 23°C, monomeres HDI = 0,1 %) vorgelegt. Dazu wurden 1,6 g 2,6-Di-tert.-butyl-4-methyl-phenol gegeben. Unter Rühren wurde die Lösung auf 60°C erwärmt. Die Heizquelle wurde entfernt und es wurden 116,0 g 2-Hydroxyethylacrylat derart zugetropft, dass die Temperatur zwischen 55 und 65°C lag. Im Anschluss wurde bei 60°C weiter umgesetzt, bis der NCO-Gehalt unter 12,8 % lag.

Kennzahlen nach 24 h Lagerung bei RT:

| | Viskosität | Festgehalt | NCO-Gehalt | NCO-Funktionalität* | Farbzahl (APHA) |
|---|---|---|---|---|---|
| **Beispiel 2** | 12650 mPas | 99,8% | 12,7% | 2,1 | 22 |

| | | | | | |
|---|---|---|---|---|---|
| * - Bestimmung der NCO-Funktionalität erfolgte analog Beispiel 1. | | | | | |

### Beispiel 3: Herstellung eines Isocyanatoacrylats

In einem Mehrhalskolben mit Rückflusskühler, Rührer, Tropftrichter, Innenthermometer und Luftdurchleitung (6 1/h) wurden 375,00 g Butylacetat, 642,22 g eines handelsüblichen Isocyanuratpolyisocyanats auf Basis von Diisocyanatohexan (HDI) (NCO = 21,8 %, Viskosität = 3000 mPas/23 °C, monomeres HDI = 0,1 %) und 0,87 g 2,6-Di-tert.-butyl-4-methylphenol bei RT vorgelegt und dann auf 60 °C aufgeheizt. 160,65 g eines Umsetzungsproduktes von Glycidylmethacrylat mit Acrylsäure, hergestellt nach Beispiel 19 in EP-A 1541609, wurden langsam zugetropft, wobei eine maximale Temperatur von 65 °C erreicht wurde. Danach wurde das Reaktionsgemisch so lange bei 60 °C gerührt, bis ein NCO-Gehalt ≤ 9,5 % erreicht wurde. Anschließend wurden 71,25 g Cyclohexandimethanol langsam zugetropft, wobei eine maximale Temperatur von 65 °C erreicht wurde. Das Reaktionsgemisch wurde anschließend so lange bei 60 °C weiter gerührt, bis ein NCO-Gehalt von ≤ 5,6 % erreicht wurde.

Kennzahlen nach 24 h Lagerung bei RT:

| | Viskosität | Festgehalt | NCO-Gehalt | NCO-Funktionalität* | Farbzahl (APHA) |
|---|---|---|---|---|---|
| **Beispiel 3** | 12400 mPas | 70,1% | 5,4% | 2,1 | 26 |

| | | | | | |
|---|---|---|---|---|---|
| * - Bestimmung der NCO-Funktionalität erfolgte analog Beispiel 1. | | | | | |

### Beispiel 4: Herstellung eines Epoxyacrylats

In einem Mehrhalskolben mit Rückflusskühler, Rührer, Tropftrichter, Innenthermometer und Luftdurchleitung (6 l/h) wurden 2644,84 g Eponex^{®}1510 (Firma Hexion), 17,40 g Triphenylphosphin und 3,48 g 2,6-Di-tert.-butyl-4-methylphenol bei RT vorgelegt und dann auf 60 °C aufgeheizt. 834,28 g Acrylsäure wurden über mehrere Stunden bei 60 °C zugetropft. Nach Ende der Zugabe wurde die Temperatur auf 80 °C erhöht und so lange gehalten, bis die Säurezahl auf unter 1,5 gefallen war. Anschließend wurden 1498 g Butylacetat zugegeben und 3 h bei 60 °C gerührt.

Kennzahlen nach 24 h Lagerung bei RT:

| | Viskosität | Festgehalt | Hydroxylzahl | Säurezahl | Farbzahl (APHA) |
|---|---|---|---|---|---|
| **Beispiel 4** | 140 mPas | 70,4 % | 137 | 1,4 | 36 |

### Beispiel 5: Herstellung eines Epoxyacrylats

In einem Mehrhalskolben mit Destillationsbrücke, Rührer und Stickstoffdurchleitung (6 L/h) wurden 2700,06 g Adipinsäure und 499,54 g Butandiol bei RT vorgelegt und unter Rühren auf 180 °C erwärmt bis eine Säurezahl von ≤ 484 erreicht wurde. 2251,88 g dieses Vorproduktes wurden in einem weiteren Mehrhalskolben mit Rückflusskühler, Innenthermometer und Luftdurchleitung (6 L/h) zusammen mit 2735,94 g Glycidylmethacrylat, 9,98 g Triphenylphosphin und 4,99 g 2,6-Di-tert.butyl-4-methylphenol bei RT vorgelegt und langsam unter Rühren auf 80 °C aufgeheizt und so lange bei dieser Temperatur gehalten, bis die Säurezahl konstant ≤ 20 war.

Kennzahlen nach 24 h Lagerung bei RT:

| | Viskosität | Hydroxylzahl | Säurezahl | Farbzahl (APHA) |
|---|---|---|---|---|
| **Beispiel 5** | 2.900 mPas | 216 | 20,5 | 114 |

### Beispiel 6: Herstellung eines Polycarbonatdiols auf Basis 3-Methy-1,5-Pentandiol

In einem 60 1 Druckreaktor mit Destillationsaufsatz, Rührer und Vorlage wurden 34092 g 3-Methyl-1,5-Pentandiol mit 8,0 g Ytterbium(III)acetylacetonat sowie 10223 g Dimethylcarbonat bei 80 °C vorgelegt. Anschließend wurde unter Stickstoffatmosphäre das Reaktionsgemisch in 2 h auf 150 °C aufgeheizt und dort unter Rühren und Rückfluß 2 h gehalten wobei der Druck auf 3,9 bar (absolut) anstieg. Danach wurden das Spaltprodukt Methanol im Gemisch mit Dimethylcarbonat per Destillation entfernt, wobei der Druck innerhalb von 4h kontinuierlich um insgesamt 2,2 bar gesenkt wurde. Anschließend wurde der Destillationsvorgang beendet und weitere 10223 g Dimethylcarbonat bei 150 °C zu dem Reaktionsgemisch zugepumpt und dort unter Rühren und Rückfluß 2 h gehalten, wobei der Druck auf 3,9 bar (absolut) anstieg. Danach wurde erneut das Spaltprodukt Methanol im Gemisch mit Dimethylcarbonat per Destillation entfernt, wobei der Druck innerhalb von 4 h kontinuierlich um insgesamt 2,2 bar gesenkt wurde. Anschließend wurde der Destillationsvorgang beendet und weitere 7147 g Dimethylcarbonat bei 150 °C zu dem Reaktionsgemisch zugepumpt und dort unter Rühren und Rückfluß 2 h gehalten, wobei der Druck auf 3,5 bar (absolut) anstieg. Danach wurde erneut das Spaltprodukt Methanol im Gemisch mit Dimethylcarbonat per Destillation entfernt, wobei der Druck innerhalb von 4 h auf Normaldruck gesenkt wurde. Im Anschluß daran wurde das Reaktionsgemisch innerhalb von 2 h auf 180 °C erhitzt und bei dieser Tempeartur 2 h unter Rühren gehalten. Daran anschließend wurde die Temperatur auf 130 °C reduziert und ein Stickstoffstrom (51/h) durch das Reaktionsgemisch hindurchgeleitet, während der Druck auf 20 mbar abgesenkt wurde. Danach wurde die Temperatur binnen 4 h auf 180 °C erhöht und dort 6 h gehalten. Dabei erfolgte die weitere Entfernung von Methanol im Gemisch mit Dimethylcarbonat aus dem Reaktionsgemisch.

Nach Belüftung und Abkühlung des Reaktionsansatzes auf Raumtemperatur, erhielt man ein farbloses, flüssiges Oligocarbonatdiol mit folgenden Kennzahlen:

| | |
|---|---|
| Hydroxylzahl (OHZ) | 173,4 mg KOH/g |
| Viskosität bei 75 °C , D:16: | 175 mPas |
| zahlenmittleres Molekulargewicht (Mₙ): | 646 g/mol |

### Beispiel 7: Herstellung eines Polycarbonatdiols auf Basis von 1,4-Butandiol und 1,6-Hexandiol

In einem 41 Dreihalskolben mit Rührer und Rückflusskühler wurden 532,8 g 1,4-Butandiol und 698,8 g 1,6-Hexandiol unter Stickstoffatmosphäre vorgelegt und bei 110°C und 20 mbar Druck 2 h entwässert. Danach wurde mit Stickstoff belüftet und 0,3 g Ytterbium(III)acetylacetonat sowie 1395,0 g Dimethylcarbonat zugegeben und die Reaktionsmischung 24 h unter Rückfluss (110°C Ölbadtemperatur) gehalten. Anschließend wurde der Rückflusskühler gegen eine Claisenbrücke ausgetauscht und das entstandene Spaltprodukt Methanol sowie noch vorhandenes Dimethylcarbonat abdestilliert. Dazu wurde die Temperatur von 110°C innerhalb von 2 h auf 150°C erhöht und nach Erreichen der Temperatur 4 h gehalten. Daran anschließend wurde die Temperatur innerhalb von 2 h auf 180°C erhöht und nach Erreichen weitere 4 h gehalten. Danach wurde das Reaktionsgemisch auf 100°C abgekühlt und ein Stickstoffstrom (2 l/h) in das Reaktionsgemisch eingeleitet. Weiterhin wurde der Druck auf 20 mbar stufenweise abgesenkt, so dass die Kopftemperatur während der fortlaufenden Destillation 60°C nicht überstieg. Nach Erreichen der 20 mbar wurde die Temperatur auf 130°C erhöht und dort 6 h gehalten. Nach Belüftung und Abkühlung erhielt man ein bei Raumtemperatur flüssiges Oligocarbonatdiol mit folgenden Kennzahlen:

| | |
|---|---|
| Hydroxylzahl (OHZ): | 108,9 mg KOH / g |
| Viskosität bei 75 °C , D:16: | 600 mPas |
| zahlenmittleres Molekulargewicht (Mₙ): | 1028 g/mol |

### Beispiel 8: Herstellung eines Urethanacrylats

In einem Mehrhalskolben mit Rückflusskühler, Rührer, Tropftrichter, Innenthermometer und Luftdurchleitung (2 l/h) wurden 4507,15 g eines handelsüblichen Isocyanuratpolyisocyanats auf Basis von Diisocyanatohexan (HDI) (NCO-Gehalt: 23,4 Gew.-%, Viskosität 1200 mPa s bei 23°C, monomeres HDI = 0,1 %), 2970,00 g Butylacetat, 10,51 g 2,6-Di-tert.-butyl-4-methylphenol und 5,26 g Dibutylzinndilaurat bei RT vorgelegt und dann auf 60 °C aufgeheizt. 6007,08 g eines Umsetzungsproduktes von Glycidylmethacrylat mit Acrylsäure, hergestellt nach Beispiel 19 in EP-A 1541609, wurden langsam zugetropft, wobei eine maximale Temperatur von 65 °C erreicht wurde. Danach wurde das Reaktionsgemisch so lange bei 60 °C gerührt, bis ein NCO-Gehalt ≤ 0,2 % erreicht wurde.

Kennzahlen nach 24 h Lagerung bei RT:

| | Viskosität | Festgehalt | NCO-Gehalt | Farbzahl (APHA) |
|---|---|---|---|---|
| Beispiel 8 | 3223 mPas | 77,5 % | 0,02 % | 19 |

### Beschichtungsmittel Beispiele 9-19:

Es wurden Beschichtungsmittel hergestellt, indem jeweils die Mengen gemäß der folgenden Tabelle (in g) miteinander vermischt, mit 0,75% Verlaufsadditiv Byk 306 (Byk-Chemie, Wesel, DE) und 5% einer 50%igen Lösung Photoinitiator Irgacure^{®} 184 (Ciba Speciality Chemistry, Basel, CH) versetzt und mit Butylacetat auf Spritzviskosität (20-25 s Auslaufzeit in einem Auslaufbecher mit 4 mm Öffnung, entsprechend ca. 45-60% Festgehalt) eingestellt wurden. Es wurden dabei isocyanathaltige und isocyanatfreie Bestandteile erst unmittelbar vor der Applikation zusammen gegeben.

| **Beispiel** | 9 | 10 | 11 | 12 | 13 | 14 | 15 | 16 | 17 | 18 | 19 |
|---|---|---|---|---|---|---|---|---|---|---|---|
| 1 | 1167 | 1167 | 1167 | | | | | | 525 | | |
| 2 | | | | | | | 328 | | | | 164 |
| 3 | | | | 737 | 737 | 737 | | 737 | 368 | 737 | 384 |
| 4 | | | | | | | | | | | 236 |
| 5 | 139 | 139 | 139 | 139 | | 139 | | | | 139 | |
| 6 | | | 164 | 164 | 327 | | | | 309 | 155 | |
| 7 | | 236 | | | | | | | | | 236 |
| 8 | | | | | | | 60 | 162 | 241 | | |
| PES | 202 | | | | | 202 | | | | | |
| CHDM | | | | | | | 71 | 71 | | | |
| DTBL | 300 ppm | 300 ppm | 300 ppm | | | | | | | | |

| | | | | | | | | | | | |
|---|---|---|---|---|---|---|---|---|---|---|---|
| PES - Polyhexandioladipat (Molgewicht ca. 850 g/mol, OH-Gehalt 4,2%) CHDM-1,4-Cyclohexandimethanol (techn. Isomerengemisch, OH-Gehalt 24,0%) DBTL - Dibutylzinndilaurat (Urethanisierungskatalysator) | | | | | | | | | | | |

Die Beschichtungsmittel wurden jeweils auf eine mit einem handelsüblichen farbigen Kunststoffbasislack aus der Automobillackierung beschichteten Polycarbonat/ABS-Folie (Bayfol^{®}TP 231, Bayer MaterialScience AG, Leverkusen, DE; Dicke 1 mm, beschichtet wurde die Polycarbonatseite), auf schwarz eingefärbte Polycarbonatfolie (Dicke 1 mm), sowie zur Bestimmung der Chemikalienresistenz und der Kratzfestigkeit auf schwarz, glänzend beschichtete Bleche mittels einer Spritzpistole appliziert. Die Trockenschichtdicke betrug dabei jeweils etwa 60 µm. Alle Beschichtungen wurden anschließend 10 min bei Umgebungstemperatur und dann 20 min bei 100 °C in einem Umluftofen vorgetrocknet. Anhand der beschichteten Polycarbonatfolien wurde nach Abkühlen auf Umgebungstemperatur die Blockfestigkeit der Beschichtungen getestet (analog DIN 53150, Beschichtung gegen Folienrückseite, runde Gummiauflage d=2 cm, 2 kg Belastung für 60 s, Bewertung 1 = sehr klebrig bis 5 = trocken, unverändert). Die Biegefestigkeit der beschichteten Folien wurde durch Biegen um ein Rohr mit einem Durchmesser von 8 cm getestet. Der Test galt als bestanden, wenn die Beschichtung anschließend keine Risse aufweist.

Die beschichteten Folien wurden tiefgezogen. Als Werkzeug wurde eine Stufenpyramide mit jeweils ca. 2 cm vertikaler und horizontaler Kantenlänge verwendet. Der Verstreckungsgrad wurde durch Messung der Dicke der Folie an den verschiedenen Stufenflächen, -innen- und -außenkanten nach dem Tiefziehen bestimmt. Angegeben werden Verstreckungsgrade >20, >50, >100 oder >150%. Das Tiefziehen erfolgte bei 185 °C Folientemperatur in ca. 60 s, Werkzeugtemperatur 65 °C, ohne Vorblasen).

Die Beschichtungen auf den tiefgezogenen Folien und den Blechen wurden mit einem Quecksilberstrahler (Leistung 80 W/cm Lampenlänge) mit einer Dosis von ca. 3000 mJ/cm² gehärtet.

Die Kratzfestigkeit wurde gemäß der DIN 55668 - Methode zur "Prüfung der Kratzfestigkeit von Beschichtungen mit einer Laborwaschanlage" bestimmt. Gemessen wurde der Glanzgrad der Beschichtung im 20° Winkel vor und nach der Verkratzung sowie nach der Verkratzung und 2 h 80 °C. Die Chemikalienfestigkeit erfolgte mit 1%iger Schwefelsäure nach der Daimler-Chrysler-Gradientenofenmethode. Angegeben wird die niedrigste Temperatur, bei der nach einer Stunde Einwirkdauer eine Schädigung des Lacks zu erkennen ist. Der erste Wert entspricht der Beurteilung 1 h, der zweite 24 h nach Ende der Belastung. Weiterhin wurde die Lösemittelbeständigkeit der Beschichtungen durch 100 Doppelhübe (Andruck etwa 1 kg) mit einem mit Aceton getränkten Wattebausch getestet. Der Test gilt als bestanden, wenn die Beschichtung nach der Belastung einwandfrei blieb.

| **Beispiel** | **9** | **10** | **11** | **12** | **13** | **14** | **15** | **16** | **17** | **18** | **19** |
|---|---|---|---|---|---|---|---|---|---|---|---|
| Blockfestigkeit | 5 | 4 | 4 | 4 | 4 | 3 | 3 | 4 | 4 | 4 | 3 |
| Biegetest | Ok | Ok | Ok | Ok | Ok | Ok | Ok | Ok | Ok | Ok | Ok |
| Verstreckungsgrad | >150% | >150% | >150% | >50% | >50% | >50% | >50% | >50% | >50% | >50% | >50% |
| Acetonfestigkeit | Ok | Ok | Ok | Ok | Ok | Ok | Ok | Ok | Ok | Ok | Ok |
| Gradientenofen Schwefelsäure | 36/36 | 44/44 | 54/54 | 40/40 | 36/36 | 40/40 | 36/36 | 48/48 | 51/51 | 40/41 | 40/40 |
| Kratzfestigkeit Glanz vor Verkratzung | 88 | 87 | 89 | 84 | 78 | 85 | 88 | 87 | 86 | 88 | 81 |
| Glanz nach Verkratzung | 47 | 43 | 44 | 77 | 72 | 82 | 64 | 63 | 57 | 75 | 48 |
| Glanz nach Verkratzung und 2h bei 80°C | 47 | 43 | 44 | 77 | 73 | 81 | 70 | 66 | 66 | 76 | 49 |

Die Beispiele zeigen, dass die Beschichtungen nach dem Trocknen sowohl gut bis sehr gut in der Blockfestigkeit, aber trotzdem noch biegefähig sind. Die Beschichtungen sind tiefziehfähig und weisen hohe Verstreckungsgrade auf. Nach der UV-Härtung erfüllen die Beschichtungen im Hinblick auf die getesteten Eigenschaften Lösemittelfestigkeit, Schwefelsäureresistenz und Kratzfestigkeit Anforderungen, wie sie aktuell in der Autoserienlackierung von Karossen gestellt werden.

### Beispiel 20: Hinterspritzen einer tiefgezogenen, mit UV-gehärteter Beschichtung und Kunststoffbasislack versehenen Polyearbonat/ABS-Folie

Zum Hinterspritzen werden auf der Rückseite (ABS-Seite) des dreidimensionalen Folienformkörpers zunächst Glasfasermatten vollflächig aufgelegt. Im zweiten Arbeitsschritt wird der dreidimensionale Folienformkörper auf einen passenden, beheizbaren Formstempel aufgelegt. Der verbleibende Hohlraum zwischen Formstempel und Folienformkörper wird dann im dritten Arbeitsschritt mit einem flüssigen 2-K-PUR-System hinterspritzt.

## Patentansprüche

1. Verfahren zur Herstellung eines beschichteten Formkörpers, **dadurch gekennzeichnet, dass**
1. eine Lackkomposition enthaltend
A) eine oder mehrere Isocyanate, die
A1) keine ethylenisch ungesättigte Doppelbindungen enthalten und/oder
A2) ethylenisch ungesättigte Doppelbindungen enthalten und
B) eine oder mehrere isocyanat-reaktive Verbindungen, die
B1) keine ethylenisch ungesättigten Doppelbindungen enthalten und/oder
B2) ethylenisch ungesättigte Doppelbindungen enthalten,
wobei zumindest eine der Komponenten A oder B ethylenisch ungesättigten Doppelbindungen enthalten müssen, sowie gegebenenfalls
C) ethylenisch ungesättigten Verbindungen, die keine zur Polyaddition geeignete chemische Funktionen aufweise
D) Fotoinitiatoren
E) Additive wie Stabilisatoren, Katalysatoren und andere Hilfs- und Zusatzstoffe
F) nichtfunktionelle Polymere und/oder Füllstoffe,
wobei keine der zur Vernetzung durch eine Polyadditionsreaktion befähigten Komponenten eine mittlere Funktionalität größer 2,8 aufweist.
auf ein thermisch verformbares Substrat aufgetragen wird,
2. das Produkt aus Schritt 1 durch Polyaddition thermisch gehärtet wird,
3. das Produkt aus Schritt 2 durch thermische Verformung in die gewünschte Form gebracht wird und
4. das Produkt aus Schritt 3 durch Bestrahlung mit aktinischer Strahlung ausgehärtet wird.

2. Verfahren gemäß Anspruch 1, **dadurch gekennzeichnet, dass** das thermisch verformbare Substrat aus PMMA oder Polycarbonat besteht.

3. Verfahren gemäß einem der Ansprüche 1 oder 2, **dadurch gekennzeichnet, dass** die thermische Verformung in Schritt 3 durch Tiefziehen oder Vakuum-Tiefziehen erfolgt.

4. Verfahren gemäß einem der Ansprüche 1 bis 3, **dadurch gekennzeichnet, dass** die Aushärtung in Schritt 4 durch UV-Strahlung erfolgt.

5. Beschichtete Formkörper erhältlich nach einem Prozess gemäß einem der Ansprüche 1 bis 4.

6. Beschichtete Formkörper gemäß Anspruch 5, **dadurch gekennzeichnet, dass** es sich um Automobilkomponenten handelt.

## Claims

1. Method for producing a coated moulded body,
**characterized in that**
1. a surface-coating composition comprising
A) one or more isocyanates which
A1) do not contain ethylenically unsaturated double bonds and/or
A2) contain ethylenically unsaturated double bonds
and
B) one or more isocyanate-reactive compounds which
B1) do not contain ethylenically unsaturated double bonds and/or
B2) contain ethylenically unsaturated double bonds,
wherein at least one of components A and B must contain ethylenically unsaturated double bonds, and optionally
C) ethylenically unsaturated compounds that do not contain chemical functions suitable for polyaddition,
D) photoinitiators,
E) additives such as stabilizers, catalysts and other auxiliary substances and additives,
F) non-functional polymers and/or fillers,
wherein none of the components capable of cross linking through a polyaddition reaction has a mean functionality greater than 2.8,
is applied to a thermally formable substrate,
2. the product from Step 1 is cured thermally by polyaddition,
3. the product from Step 2 is brought into the desired form by thermal forming, and
4. the product from Step 3 is cured by irradiation with actinic radiation.

2. Method according to Claim 1, **characterized in that** the thermally formable substrate is composed of PMMA or polycarbonate.

3. Method according to any of Claims 1 or 2, **characterized in that** the thermal forming in Step 3 takes place by thermoforming or vacuum forming.

4. Method according to any of Claims 1 to 3, **characterized in that** the curing in Step 4 takes place by UV radiation.

5. Coated moulded bodies obtainable by an operation according to any of Claims 1 to 4.

6. Coated moulded bodies according to Claim 5, **characterized in that** they are motor vehicle components.

## Revendications

1. Procédé pour la préparation d'un corps moulé revêtu,
**caractérisé en ce que**
1. on applique sur un substrat thermiquement déformable une composition de laque contenant
A) un ou plusieurs isocyanates, lesquels
A1) ne contiennent pas de double liaison éthyléniquement insaturée et/ou
A2) contiennent des doubles liaisons éthyléniquement insaturées et
B) un ou plusieurs composés isocyanates-réactifs, lesquels
B1) ne contiennent pas de double liaison éthyléniquement insaturée et/ou
B2) contiennent des doubles liaisons éthyléniquement insaturées,
au moins un des constituants A ou B devant contenir des doubles liaisons éthyléniquement insaturées,
ainsi qu'éventuellement
C) des composés éthyléniquement insaturés qui ne présentent pas de fonction chimique appropriée pour une polyaddiiton
D) des photoinitiateurs,
E) des additifs ainsi que des stabilisateurs, des catalyseurs et d'autres auxiliaires et additifs,
F) des polymères non fonctionnels et/ou des charges,
dans laquelle aucun des constituants aptes à une réticulation par une réaction de polyaddition ne présente une fonctionnalité moyenne supérieure à 2,8,
2. on fait durcir thermiquement le produit de l'étape 1) par polyaddition,
3. on amène le produit de l'étape 2 dans la forme souhaitée par déformation thermique et
4. on fait durcir le produit de l'étape 3 par irradiation avec un rayonnement actinique.

2. Procédé selon la revendication 1, **caractérisé en ce que** le substrat thermiquement déformable est constitué de PMMA ou de polycarbonate.

3. Procédé selon l'une quelconque des revendications 1 ou 2, **caractérisé en ce que** la déformation thermique dans l'étape 3) est réalisée par emboutissage profond ou emboutissage profond sous vide.

4. Procédé selon l'une quelconque des revendications 1 à 3, **caractérisé en ce que** le durcissement dans l'étape 4 est réalisé par rayonnement U.V.

5. Corps moulés revêtus obtenus selon un procédé selon l'une quelconque des revendications 1 à 4.

6. Corps moulés revêtus selon la revendication 5, **caractérisé en ce qu'**il s'agit de constituants pour des véhicules automobiles.
